# EUROPEAN PATENT APPLICATION

(11) **EP 1 388 599 A1**
(43) Date of publication of application: **11.02.2004**
(21) Application number: 02017634.3
(22) Date of filing: 06.08.2002
(51) Int. Cl.: D03D 47/27, F16H 55/17, F16H 55/02

(54) **Toothed wheel with optimized structure particularly for weaving looms and the like**

(71) Applicant: LAMIFLEX S.p.A., I-24028 Ponte Nossa (Bergamo) (IT)
(72) Inventor: Cerri, Alain, 24020 Ranica (Bergamo) (IT)
(74) Representative: Modiano, Guido, Dr.-Ing.

(57) **Abstract**

A toothed wheel (1) with optimized structure, particularly for weaving looms and the like, that comprises a disk-like element (2) around which there is a toothed ring (4), the wheel further comprising detachable connection means (20) for rigidly coupling the toothed ring (4) to the disk-like element (2).

## Description

The present invention relates to a toothed wheel with optimized structure particularly for weaving looms and the like.

As is known, weaving looms and the like use toothed wheels, commonly known as sprockets, that are generally provided by means of a disk-like element made of composite material, such as for example an inner core of expanded material covered by skins of composite laminate based on carbon fibers, on which an overmolding of thermoplastic material is then performed.

This embodiment has the drawback of rapid wear of the sets of teeth, since the thermoplastic resins are unable to provide optimum strength.

In an attempt to obviate this drawback, toothed wheels have already been proposed in which the portion related to the set of teeth has metallic inserts that in practice encapsulate the various teeth so that the friction surface is constituted by the metallic portions.

This type of solution has an increased resistance to wear, but it has the great drawback of increasing significantly the weights, so that the inertial forces that are generated during the operation of the toothed wheel are particularly large and subject the toothed wheel to considerable stress.

Moreover, another drawback consists in that in some kinds of application the set of metal teeth is excessively abrasive, thus damaging the elements with which it interacts.

The aim of the present invention is to eliminate the drawbacks noted above, providing a toothed wheel with optimized structure particularly for weaving looms and the like in which it is possible to reduce significantly the weights involved and to increase significantly the useful life of the disk-like element that constitutes the main portion of the toothed wheel.

Within this aim, an object of the present invention is to provide a toothed wheel in which the wear produced by the set of teeth on the elements with which it makes contact is reduced, thus allowing to use it in the most disparate fields of application.

Another object of the invention is to provide a toothed wheel that thanks to its particular constructive characteristics is capable of giving the greatest assurances of reliability and safety in use.

Another object of the invention is to provide a toothed wheel that can be obtained easily starting from commonly commercially available elements and materials and is further competitive from a merely economical standpoint.

This aim and these and other objects that will become better apparent hereinafter are achieved by a toothed wheel with optimized structure, particularly for weaving looms and the like, illustrated by way of non-limitative example in the accompanying drawings, wherein:

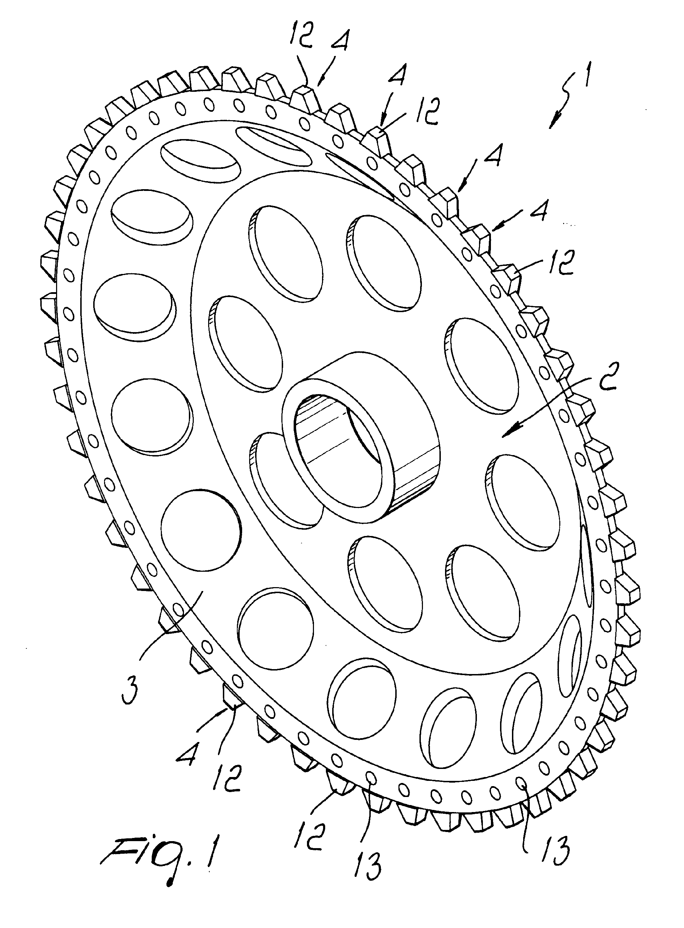

Figure 1 is a perspective view of a toothed wheel according to the invention;
Figure 2 is a view of a detail of the set of teeth;
Figure 3 is a sectional view of a first embodiment of the means for connecting the toothed ring;
Figure 4 is a sectional view of a different embodiment of the means for connecting the toothed ring.

With reference to the figures, a toothed wheel with optimized structure according to the invention, generally designated by the reference numeral 1, comprises a disk-like element 2, which in a per se known manner is advantageously constituted by an inner core made of expanded plastics, which is covered by skins 3 made of composite laminate such as fiber reinforcement/synthetic resins.

A toothed ring, generally designated by the reference numeral 4, is connected to such disk-like body 2 and has the particularity of being rigidly associable with the disk-like element 2 by way of detachable connection means.

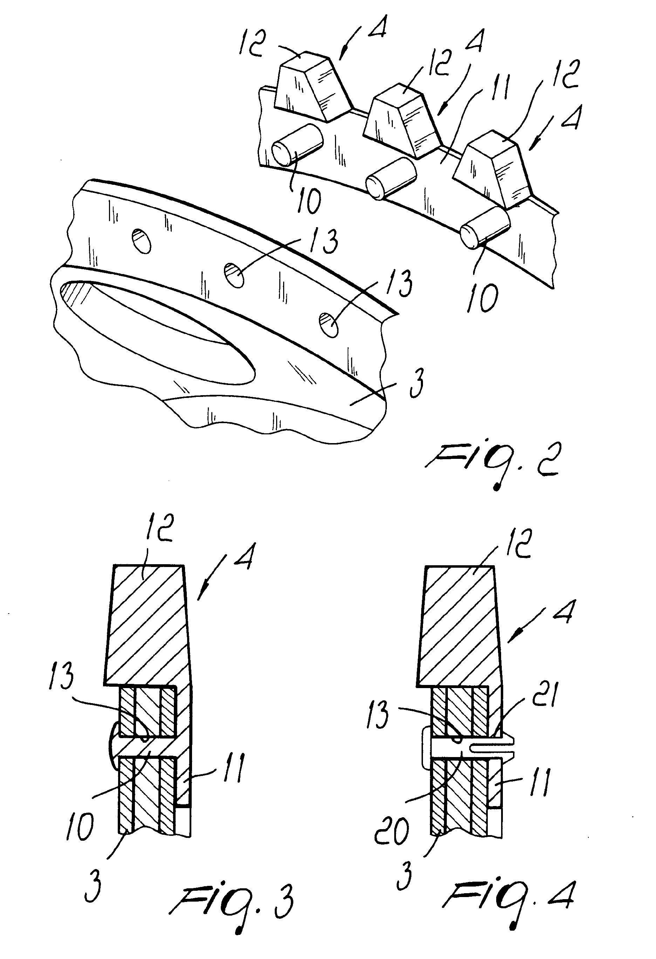

As shown schematically in Figure 3, the detachable connection means are provided by pins 10 that protrude from a flange-like ring 11 to which the teeth 12 are connected. The pin 10 can be inserted in corresponding holes 13 formed peripherally on the rim of the disk-like element and are then riveted so as to rigidly couple the toothed ring to the disk-like element.

According to what is shown in Figure 4, the detachable connection means are provided by means of elastic pins 20, which enter the holes 13 and corresponding coupling holes 21 formed in the flange-like ring 11 of the teeth 12.

The toothed ring 4 is advantageously made of resin filled with fibers such as carbon, aramid resin, polytetrafluoroethylene, and so forth.

Furthermore, the resin can also be obtained by means of a thermoplastic resin, such as polyamide, polyethylene, polyethyl ethyl ketone or thermosetting resins such as epoxy resins, phenolic resins and polyester resins.

The provision of a toothed ring that in practice is of the interchangeable type allows to use, starting from the same body of the sprocket, different sets of teeth made of different kinds of material depending on the specific use, thus solving all the problems linked to coupling to other materials.

Furthermore, the particular structure provided allows to replace and interchange rapidly the part that is subject to wear without having to act on the body of the sprocket or disk-like element, which is the most expensive element since it is made of composite material.

It should be added to the above that the toothed ring can optionally be covered by a cladding and that it is also possible to use different detachable connection means according to the specific uses.

The invention thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A toothed wheel (1) with optimized structure, particularly for weaving looms and the like, comprising a disk-like element (2) around which there is a toothed ring (4), **characterized in that** it comprises detachable connection means (20) for rigidly coupling said toothed ring (4) to said disk-like element (2).

2. The toothed wheel according to claim 1, **characterized in that** said disk-like element (2) comprises a core made of expanded plastic material around which skins (3) of composite laminate with fiber reinforcement/synthetic resin are applied.

3. The toothed wheel according to claim 1, **characterized in that** said toothed ring (4) is made of fiber-filled resin.

4. The toothed ring according to claim 1, **characterized in that** said toothed ring (4) is made of thermoplastic resin.

5. The toothed ring according to claim 1, **characterized in that** said toothed ring (4) is made of thermosetting material.

6. The toothed ring according to claim 1, **characterized in that** said detachable connection means comprise a plurality of pins (20) that protrude monolithically from a flange-like ring (11) of said toothed ring (4) and can be inserted in a corresponding holes (13) formed in the peripheral region of said disk-like element (2).

7. The toothed ring according to claim 6, **characterized in that** said detachable connection means comprise elastic pins (20) that can be inserted in holes (13) formed in the peripheral region of said disk-like element (2) and in coupling holes (21) provided on the flange-like ring (11) of said toothed ring (4).
